(19) Europäisches Patentamt
European Patent Office
Office européen des brevets

(11) Publication number: **0 039 535**
**B1**

(12) **EUROPEAN PATENT SPECIFICATION**

(45) Date of publication of patent specification: **24.10.84**

(51) Int. Cl.³: **A 01 N 47/22** // (A01N47/22, 47/18, 47/16, 47/12)

(21) Application number: **81300026.2**

(22) Date of filing: **06.01.81**

(54) **Synergistic herbicidal compositions and use thereof.**

(30) Priority: **28.04.80 US 144151**
**28.11.80 US 210298**

(43) Date of publication of application:
**11.11.81 Bulletin 81/45**

(45) Publication of the grant of the patent:
**24.10.84 Bulletin 84/43**

(84) Designated Contracting States:
**AT BE DE FR GB IT NL SE**

(56) References cited:
**DE-A-2 218 347**
**FR-A-2 180 803**
**FR-A-2 192 766**
**FR-A-2 398 053**

**CHEMICAL ABSTRACTS, vol. 91, no. 11, October 10, 1979, page 224, abstract 84990n, COLUMBUS OHIO (US), I.N. VELETSKII: "Localized application"**

**The file contains technical information submitted after the application was filed and not included in this specification**

(73) Proprietor: **STAUFFER CHEMICAL COMPANY**
**Westport Connecticut 06880 (US)**

(72) Inventor: **Groenwold, Bareld Egge**
**Rte de la Bellangere**
**CH-1261 Givrins (CH)**

(74) Representative: **Smith, Sydney et al**
**Elkington and Fife High Holborn House 52/54**
***High Holborn***
**London WC1V 6SH (GB)**

(56) References cited:
**CHEMICAL ABSTRACTS, vol. 91, no. 5, July 30, 1979, page 162, abstract 33976e, COLUMBUS OHIO (US), J. ROLA: "Present state and perspectives of chemical weed control in sugar beet crops"**

**CHEMICAL ABSTRACTS, vol. 94, no. 21. May 25, 1981, page 234, abstract 169313f, COLUMBUS OHIO (US), N.F. KOSTIN et al.: "Application of a mixture of herbicides on sugar beet plantings"**

**EP 0 039 535 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to synergistic herbicidal compositions and to the use thereof for the control of vegetation.

The projection of crops from weeds and other vegetation which inhibit crop growth is a constantly recurring problem in agriculture.

FR—A—2,192,766 discloses a two stage treatment for the control of undesirable plants in large scale agricultural operations in which the soil is treated with a thiolcarbamate before the plants emerge and then with a phenylcarbamate and/or with phenyl - 1 - amino - 4 - chloro - 5 - pyridazone - (6) after they emerge.

An example of the thiolcarbamate is S-ethyl N-cyclohexyl-N-ethyl thiolcarbamate and of the phenylcarbamate is methyl 3,3′-methylphenylcarbamoyloxy phenylcarbamate.

In some cases, active herbicides have been shown to be more effective in combination than when applied individually. The result is often termed "synergism", since the combination demonstrates a potency or activity level exceeding that which it would be expected to have, based on a knowledge of the individual potencies of the components. The present invention resides in the discovery that a certain thiolcarbamate and a certain carbamoyloxycarbanilate, already known individually for their herbicidal potency, display this effect when applied in combination.

In DE—A—2218347 there are disclosed herbicides which contain a mixture of two active herbicide compounds, that is to say a mixture of thiolcarbamate and a biscarbamate or a uracil or pyridazone. In particular there is disclosure of a mixture of ethyl - N - ethyl - N - bicyclo - [2,2,1] - heptyl - thiolcarbamate and 3 - methoxy - carbonylaminophenyl - N - (3′ - methylphenyl) - carbamate as a herbicide and it is disclosed that these may act synergistically.

We have found that the mixture of 3 - methoxycarbonylaminophenyl - N - (3′ - methylphenyl) - carbamate with S-ethyl, N-cyclohexyl-N-ethyl thiocarbamate has an unexpectedly high synergistic effect as a herbicide.

The invention therefore provides a synergistic herbicidal composition comprising a mixture of

(a) a thiolcarbamate of the formula

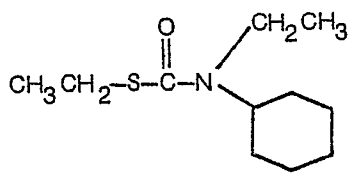

(S-ethyl N-cyclohexyl-N-ethyl thiolcarbamate)

and

(b) a phenylcarbamoyloxycarbanilate of the formula

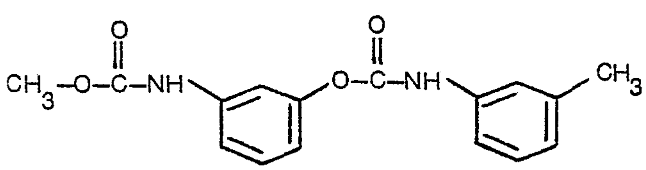

(methyl 3,3′-methylphenylcarbamoyloxy phenylcarbamate)

in which the weight ratio of (a) to (b) is from 0.1:1 to 10:1.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which controls or modifies the growth of plants. The term "herbicidally effective amount" is used to indicate the quantity of such a compound or combination of such compounds which is capable of producing a controlling or modifying effect. Controlling or modifying effects include all deviations from natural development, for example: killing, retardation, leaf burn, and dwarfing.

The term "plants" is used to include all postemergent vegetation, ranging from seedlings to established vegetation.

In the composition of this invention, the thiolcarbamate: phenylcarbamoyloxycarbanilate weight ratio at which the herbicidal response is synergistic lies within the range of 0.1:1 to 10:1, preferably 0.1:1 to 5:1.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The following examples provide further illustrations demonstrating the synergistic herbicidal response of the present compositions.

Example I

This example demonstrates the synergistic response of methyl 3,3′-methylphenylcarbamoyloxy phenylcarbamate (phenmedipham) and S-ethyl N-cyclohexyl-N-ethyl thiolcarbamate (cycloate) in combined postemergence application to a variety of weeds.

Fiber flats measuring 15.2 × 25.4 × 7.0 cm were filled to a depth of 5.0 cm with loamy sand soil, containing 50 parts per million (ppm) each of the commercial fungicide cis - N[(trichloromethyl)-thio] - 4 - cyclohexene - 1,2 - dicarboximide (Captan®) and 18—18—18 fertilizer (percentages of N—$P_2O_5$—$K_2O$ on a weight basis). Several rows were impressed across the width of each flat and each row was seeded with a single plant species. The plant species included one row of sugarbeets (*Beta vulgaris*) and one row each of the following weeds: peppergrass (*Lepidium sp.*), wild buckwheat (*Polygonum convolvulus*), and common purslane (*Portulaca oleracea*). In the weed rows, ample seeds were planted to give about 20 to 50 seedlings per row after emergence depending on the size of the plants. The flats were then placed in a greenhouse for two weeks, where they were watered regularly.

At the end of this period, the foliage on the emergent weeds was sprayed with herbicidal emulsions formed by diluting emulsifiable concentrates of the test compounds with water. The phenmedipham was in the form of an emulsifiable concentrate containing 16.8% phenmidipham by weight and the cycloate concentrate contained 74.2% cycloate by weight. The dilutions were made such that a total spray volume of 80 gallons per acre (750 liters per hectare) of the amount of each test compound applied per flat correspond to the desired application rate in pounds per acre. In control flats, the test compounds were applied individually at various application rates, whereas in the test flats, emulsions containing both compounds were applied. Additional flats not treated at all were used as standards for measuring the extent of weed control occurring in the treated flats.

Eighteen days after treatment, the control and test flats were compared to the standards and each row was rated visually in terms of percent control ranging from 0% to 100%, with 0% representing the same degree of growth as the same row in the standard and 100% representing complete kill of all weeds in the row. All types of plant injury were taken into consideration.

For the weed species, the results of these tests are listed in Table 1 in the columns headed by the symbol "O" (indicating the "observed" results), each figure representing the average of two replications of the same test. These results are compared with the expected results, shown in the columns headed by the symbol "E", derived from the control data using Limpel's formula (Limpel et al., 1962, "Weed Control by Dimethylchloroterephthalate Alone and in Certain Combinations," Proc. NEWCC., Vol. 16, pp. 48—53):

$$E = X + Y - \frac{XY}{100}$$

where

X = observed percent injury when one of the herbicides is used alone, and

Y = observed percent injury when the other herbicide is used alone.

An asterisk (*) is used to indicate the tests where the results show synergism, i.e., where the observed result exceeds the expected result. It is clear from the table that synergism was observed at many of the application rates tested. No injury to the sugarbeets was detected.

TABLE 1
Herbicide Synergism Test Results

Test Compounds:

A:

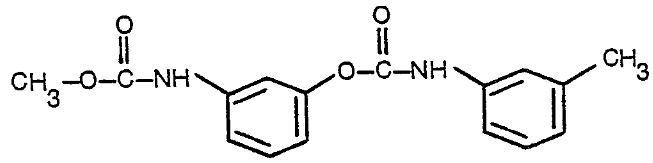

B:

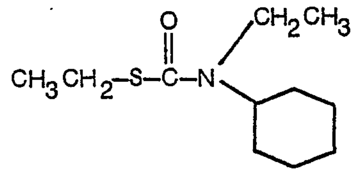

Postemergence Application; Average of Two Replications

| Application Rates kg/ha (lb/A) | | Percent Control — O: Observed E: Expected | | | | | |
|---|---|---|---|---|---|---|---|
| | | Peppergrass | | Wild Buckwheat | | Purslane | |
| A | B | O | E | O | E | O | E |
| Control Data: | | | | | | | |
| 0.56 (0.5) | — | 0 | | 0 | | 10 | |
| 1.12 (1.0) | — | 0 | | 0 | | 20 | |
| 2.24 (2.0) | — | 100 | | 30 | | 53 | |
| — | 1.12 (1.0) | 0 | | 0 | | 0 | |
| — | 2.24 (2.0) | 0 | | 0 | | 0 | |
| — | 3.36 (3.0) | 0 | | 0 | | 0 | |
| Test Data: | | | | | | | |
| 0.56 (0.5) | 1.12 (1.0) | 0 | 0 | 0 | 0 | 0 | 10 |
| 0.56 (0.5) | 2.24 (2.0) | 0 | 0 | 0 | 0 | 58* | 10 |
| 0.56 (0.5) | 3.36 (3.0) | 0 | 0 | 0 | 0 | 60 | 10 |
| 1.12 (1.0) | 1.12 (1.0) | 0 | 0 | 20* | 0 | 40* | 20 |
| 1.12 (1.0) | 2.24 (2.0) | 0 | 0 | 25* | 0 | 65* | 20 |
| 1.12 (1.0) | 3.36 (3.0) | 0 | 0 | 40* | 0 | 70* | 20 |
| 2.24 (2.0) | 1.12 (1.0) | | | 100* | 30 | 75 | 53 |
| 2.24 (2.0) | 2.24 (2.0) | 87 | 100 | 80* | 30 | 75* | 53 |
| 2.24 (2.0) | 3.36 (3.0) | | | 100* | 30 | 88* | 53 |

*Asterisk denotes synergistic effect shown.
Blank spaces indicate 100% control in both observed and expected results, preclueding evaluation of synergism.
( ) Indicates values in lb/A

Example II

In this example, the herbicide combination of Example I was retested at higher rates on additional weed species. The procedure was identical to that of Example I, except that the following weed species were used: nightshade (*Solanum sp.*), wild oat (*Avena fatua*), mustard (*Brassica juncea*), and wild buckwheat (*Polygonum convolvulus*). The flats were treated two weeks after seeding, and

injury ratings were taken one month later. The results are listed in Table 2, where each figure represents the average of two replications. Synergism is widely evident.

TABLE 2
Herbicide Synergism Test Results

Test Compounds:

A: 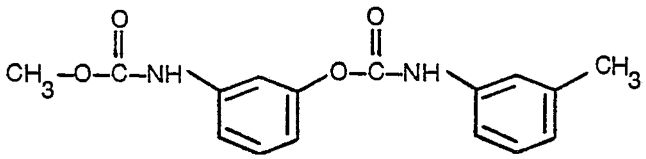

B: 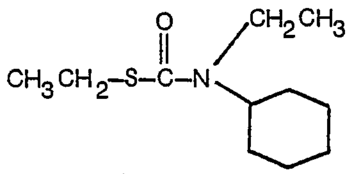

Postemergence Application; Average of two Replications

| Application Rates kg/ha (lb/A) | | Percent Control — O: Observed E: Expected | | | | | | | |
|---|---|---|---|---|---|---|---|---|---|
| | | Nightshade | | Wild Oat | | Mustard | | Wild Buckwheat | |
| A | B | O | E | O | E | O | E | O | E |
| Control Data: | | | | | | | | | |
| 0.56 (0.5) | — | 0 | | 0 | | 40 | | 0 | |
| 1.12 (1.0) | — | 0 | | 0 | | 100 | | 20 | |
| 1.68 (1.5) | — | 0 | | 0 | | 100 | | 40 | |
| 2.24 (2.0) | — | 0 | | 0 | | 100 | | 60 | |
| — | 2.24 (2.0) | 0 | | 0 | | 0 | | 0 | |
| — | 3.36 (3.0) | 0 | | 10 | | 0 | | 0 | |
| — | 4.48 (4.0) | 0 | | 30 | | 0 | | 0 | |
| Test Data: | | | | | | | | | |
| 0.56 (0.5) | 2.24 (2.0) | 0 | 0 | 0 | 0 | 50* | 40 | 20* | 0 |
| 0.56 (0.5) | 3.36 (3.0) | 50* | 0 | 0 | 10 | 60* | 40 | 0 | 0 |
| 0.56 (0.5) | 4.48 (4.0) | 0 | 0 | 0 | 30 | 0 | 40 | 20* | 0 |
| 1.12 (1.0) | 2.24 (2.0) | 0 | 0 | 0 | 0 | 75 | 100 | 30* | 20 |
| 1.12 (1.0) | 3.36 (3.0) | 50* | 0 | 0 | 10 | | | 0 | 20 |
| 1.12 (1.0) | 4.48 (4.0) | 60* | 0 | 20 | 30 | | | 30* | 20 |
| 1.68 (1.5) | 2.24 (2.0) | 0 | 0 | 0 | 0 | | | 75* | 40 |
| 1.68 (1.5) | 3.36 (3.0) | 50* | 0 | 0 | 10 | | | 40 | 40 |
| 1.68 (1.5) | 4.48 (4.0) | 50* | 0 | 50* | 30 | | | | |
| 2.24 (2.0) | 2.24 (2.0) | 65* | 0 | 20* | 0 | | | 100* | 60 |
| 2.24 (2.0) | 3.36 (3.0) | 50* | 0 | 0 | 10 | | | 60 | 60 |
| 2.24 (2.0) | 4.48 (4.0) | 50* | 0 | 65* | 30 | | | 100* | 60 |

*Asterisk denotes synergistic effect shown.
Blank spaces indicates 100% control in both observed and expected results, precluding evaluation of synergism.
( ) Indicates values in lb/A

Example III

This examples demonstrates the same herbicide combination used in Example II and covers the same weed species. Here, however, the herbicides were used in technical (unformulated) form and were diluted with a 1:1 (volume) acetone-water solution containing 0.5% (weight) Tween® 20, a polyoxyethylene sorbitan monolaurate surfactant. Otherwise, the test procedure was identical to that of the preceding examples. The results are listed in Table 3, where each figure represents the average of two replications, showing abundant synergism.

TABLE 3

Herbicide Synergism Test Results

Test Compounds:

A: 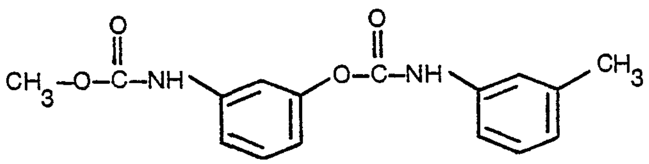

B: 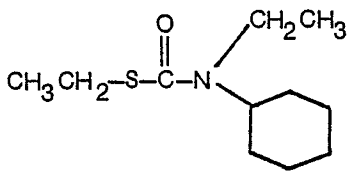

Postemergence Application; Average of Two Replications

| Application Rates kg/ha (lb/A) | | Percent Control — O: Observed E: Expected | | | | | | | |
|---|---|---|---|---|---|---|---|---|---|
| | | Nightshade | | Wild Oat | | Mustard | | Wild Buckwheat | |
| A | B | O | E | O | E | O | E | O | E |
| Control Data: | | | | | | | | | |
| 0.56 (0.5) | — | 50 | | 0 | | 100 | | 0 | |
| 1.12 (1.0) | — | 50 | | 0 | | 100 | | 0 | |
| 1.68 (1.5) | — | 60 | | 0 | | 100 | | 100 | |
| 2.24 (2.0) | — | 70 | | 0 | | 100 | | 100 | |
| — | 2.24 (2.0) | 0 | | 0 | | 0 | | 0 | |
| — | 3.36 (3.0) | 0 | | 0 | | 0 | | 0 | |
| — | 4.48 (4.0) | 0 | | 0 | | 0 | | 0 | |
| Test Data: | | | | | | | | | |
| 0.56 (0.5) | 2.24 (2.0) | 50 | 50 | 20* | 0 | | | 0 | 0 |
| 0.56 (0.5) | 3.36 (3.0) | 50 | 50 | 0 | 0 | | | 100* | 0 |
| 0.56 (0.5) | 4.48 (4.0) | 0 | 50 | 20* | 0 | | | 75 | 0 |
| 1.12 (1.0) | 2.24 (2.0) | 50 | 50 | 50* | 0 | | | 75* | 0 |
| 1.12 (1.0) | 3.36 (3.0) | 50 | 50 | 10* | 0 | | | 100* | 0 |
| 1.12 (1.0) | 4.48 (4.0) | 50 | 50 | 40* | 0 | | | 75* | 0 |
| 1.68 (1.5) | 2.24 (2.0) | 60 | 60 | 50* | 0 | | | 75* | 100 |
| 1.68 (1.5) | 3.36 (3.0) | 60 | 60 | 20* | 0 | | | | |
| 1.68 (1.5) | 4.48 (4.0) | 100* | 60 | 60* | 0 | | | | |
| 2.24 (2.0) | 2.24 (2.0) | 98* | 70 | 65* | 0 | | | | |
| 2.24 (2.0) | 3.36 (3.0) | 60 | 70 | 50* | 0 | | | | |
| 2.24 (2.0) | 4.48 (4.0) | 75* | 70 | 65* | 0 | | | | |

*Asterisk denotes synergistic effect shown.

Blank spaces indicates 100% control in both observed and expected results, precluding evaluation of synergism.

( ) Indicates values in lb/A

Example IV

This example covers a series of tests using phenmedipham in combination with cycloate.

The procedure of Example I was again followed. The cycloate was originally in technical form prior to being dissolved in acetone and diluted with water. The phenmedipham was an emulsifiable concentrate, containing 16.8% active ingredient by weight.

The weed species were as follows:

| Common Name | Scientific Name |
|---|---|
| nightshade | *Solanum sp.* |
| purslane | *Portulaca oleracea* |
| jimsonweed | *Datura stramonium* |
| mustard | *Brassica juncea* |
| velvetleaf | *Abutilon theophrasti* |
| foxtail | *Setaria sp.* |
| annual morningglory | *Ipomoea purpurea* |

The flats were treated approximately two weeks after seeding, and injury ratings were taken approximately three weeks later. The results are listed in Table 4. Purslane and jimsonweed have been eliminated from the tables since both the observed and expected results for all tests on these weed species were too close to 100% to permit an evaluation of synergism. As in the previous examples, the asterisk indicates the tests where a synergistic effect is shown, and blank spaces are used for tests other than those on purslane and jimsonweed where the observed and expected results are both extremely close to 100%, precluding a proper evaluation of synergism.

TABLE 4
Herbicide Synergism Test Results

Test Compounds:

A: 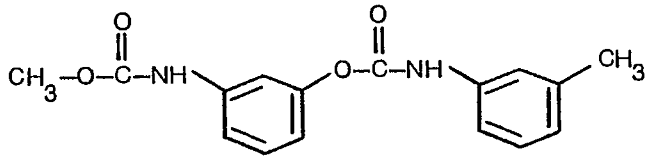

B: 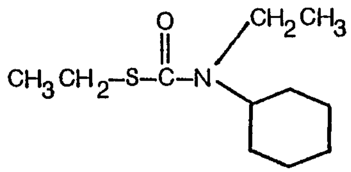

Postemergence Application

| Application Rates kg/ha (lb/A) | | Percent Control — O: Observed E: Expected | | | | | | | | | |
|---|---|---|---|---|---|---|---|---|---|---|---|
| | | Nightshade | | Mustard | | Velvetleaf | | Foxtail | | Morning Glory | |
| A | B | O | E | O | E | O | E | O | E | O | E |
| Control Data: | | | | | | | | | | | |
| 0.84 (0.75) | — | 85 | | 95 | | 0 | | 30 | | 98 | |
| 1.68 (1.5) | — | 85 | | 100 | | 0 | | 40 | | 100 | |
| — | 1.12 (1.0) | 0 | | 0 | | 0 | | 0 | | 0 | |
| — | 2.24 (2.0) | 0 | | 0 | | 0 | | 30 | | 0 | |
| — | 3.36 (3.0) | 0 | | 0 | | 0 | | 40 | | 0 | |
| Test Data: | | | | | | | | | | | |
| 0.84 (0.75) | 1.12 (1.0) | 0 | 85 | 100* | 95 | 0 | 0 | 20 | 30 | | |
| 0.84 (0.75) | 2.24 (2.0) | 98* | 85 | 100* | 95 | 0 | 0 | 30 | 51 | | |
| 0.84 (0.75) | 3.36 (3.0) | 70 | 85 | 100* | 95 | 45* | 0 | 75* | 58 | | |
| 1.68 (1.5) | 1.12 (1.0) | 98* | 85 | | | 0 | 0 | 50* | 40 | | |
| 1.68 (1.5) | 2.24 (2.0) | 85 | 85 | | | 20* | 0 | 75* | 58 | | |
| 1.68 (1.5) | 3.36 (3.0) | 40 | 85 | | | 30* | 0 | 60 | 64 | | |

( ) Indicates values in lb/A

Example V

This example covers a further series of tests using phenmedipham in combination with cycloate.

The procedure of Example I was again followed, using the herbicides in the forms indicated in Example IV. The weed species listed in Example IV were again used, with treatment occurring two weeks after seeding and injury ratings taken three weeks later. The results are shown in Table 5. Here, however, jimsonweed and mustard have been eliminated, since both the observed and expected results for all tests on these species were too close to 100% to permit an evaluation of synergism. Again, asterisks show where synergism was detected, and blank spaces indicate tests other than those on jimsonweed and mustard where the results were too high to permit a proper evaluation of synergism.

TABLE 5
Herbicide Synergism Test Results

Test Compounds:

A: 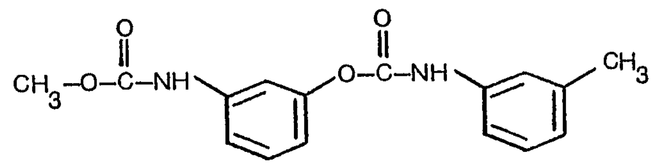

B: 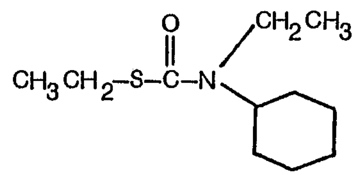

Postemergence Application

| Application Rates kg/ha (lb/A) | | Percent Control — O: Observed E: Expected | | | | | | | | | |
|---|---|---|---|---|---|---|---|---|---|---|---|
| | | Nightshade | | Purslane | | Velvetleaf | | Foxtail | | Morning Glory | |
| A | B | O | E | O | E | O | E | O | E | O | E |
| Control Data: | | | | | | | | | | | |
| 1.12 (1.0) | — | 100 | | 100 | | 0 | | 20 | | 95 | |
| 2.24 (2.0) | — | 100 | | 100 | | 0 | | 45 | | 100 | |
| — | 1.12 (1.0) | 0 | | 0 | | 0 | | 0 | | 0 | |
| — | 2.24 (2.0) | 0 | | 0 | | 0 | | 0 | | 0 | |
| — | 3.36 (3.0) | 0 | | 0 | | 0 | | 0 | | 0 | |
| Test Data: | | | | | | | | | | | |
| 1.12 (1.0) | 1.12 (1.0) | | | | | 0 | 0 | 40* | 20 | 95 | 95 |
| 1.12 (1.0) | 2.24 (2.0) | | | | | 0 | 0 | 10 | 20 | 40 | 95 |
| 1.12 (1.0) | 3.36 (3.0) | 40 | 100 | | | 0 | 0 | 30* | 20 | 90 | 95 |
| 2.24 (2.0) | 1.12 (1.0) | | | | | 10* | 0 | 65* | 45 | | |
| 2.24 (2.0) | 2.24 (2.0) | | | | | 20* | 0 | 98* | 45 | | |
| 2.24 (2.0) | 3.36 (3.0) | | | | | 0 | 0 | 35 | 45 | | |

( ) Indicates values in lb/A

The compositions of the present invention show synergistic activity as herbicides in controlling the growth of undesirable vegetation when applied to such vegetation in postemergence application. The compositions are generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; ester of long chain fatty acids; and polyhydric alcohols, in which the alcohol groups are free, omega-substituted polyethylene glycols of relatively long chain length.

The herbidical compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

## Claims

1. A synergistic herbicidal composition comprising a mixture of
(a) a thiolcarbamate of the formula

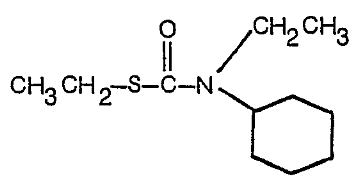

(S-ethyl N-cyclohexyl-N-ethyl thiolcarbamate)

and

(b) a phenylcarbamoyloxycarbanilate of the formula

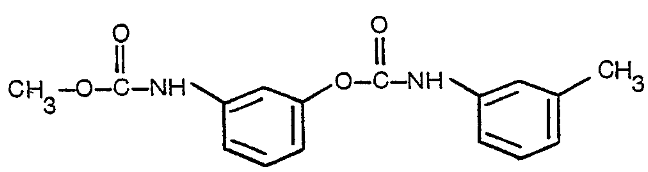

(methyl 3,3′-methylphenylcarbamoyloxy phenylcarbamate)

in which the weight ratio of (a) to (b) is from 0.1:1 to 10:1.

2. A composition as claimed in claim 1 characterised in that the weight ratio of (a) to (b) is from 0.1:1 to 5:1.

3. A herbicidal composition as claimed in claim 1 or claim 2 including an inert carrier or diluent.

4. A method of controlling undesirable vegetation characterised in that one applies to said vegetation postemergence a herbicidal composition as claimed in any of claims 1 to 3.

5. A method for the preparation of a herbicidal composition as claimed in claim 3 characterised in that component (a) and component (b) as defined in claim 1 are incorporated in an inert carrier or diluent in the ratio defined in claim 1.

**Patentansprüche**

1. Eine synergistische herbizide Zusammensetzung, die ein Gemisch aus
(a) einem Thiolcarbamat der Formel

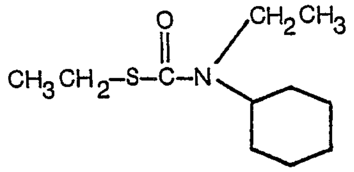

(S-Ethyl-N-cyclohexyl-N-ethylthiolcarbamat)

und
(b) einem Phenylcarbamoyloxycarbanilat der Formel

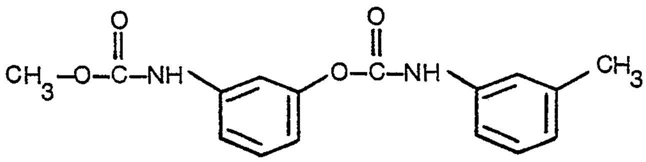

(Methyl-3,3'-methylphenylcarbamoyloxyphenylcarbamat)

in einem Gewichtsverhältnis von (a) zu (b) von 0,1:1 bis 10:1 enthält.

2. Zusammensetzung nach Anspruch 1, dadurch gekennzeichnet, daß das Gewichtsverhältnis von (a) zu (b) von 0,1:1 bis 5:1 beträgt.

3. Zusammensetzung nach Anspruch 1 oder 2, dadurch gekennzeichnet, daß sie einen inerten Träger oder ein Verdünnungsmittel enthält.

4. Verfahren zur Kontrolle von unerwünschter Vegetation, dadurch gekennzeichnet, daß man auf die Vegetation nach der Emergenz eine herbizide Zusammensetzung nach einem der Ansprüche 1 bis 3 aufbringt.

5. Verfahren zur Herstellung der herbiziden Zusammensetzung nach Anspruch 3, dadurch gekennzeichnet, daß die Komponente (a) und die Komponente (b), wie sie in Anspruch 1 definiert worden sind, in einen inerten Träger oder ein Verdünnungsmittel in dem in Anspruch 1 angegebenen Verhältnis eingearbeitet werden.

**Revendications**

1. Composition herbicide synergique comprenant un mélange de:
(a) un thiolcarbamate de formule:

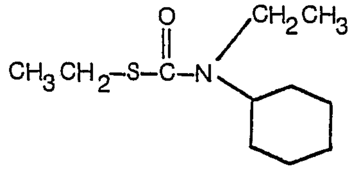

(S-éthyl N-cyclohexyl-N-éthyl thiolcarbamate)

et,
(b) un phénylcarbamoyloxycarbanilate de formule:

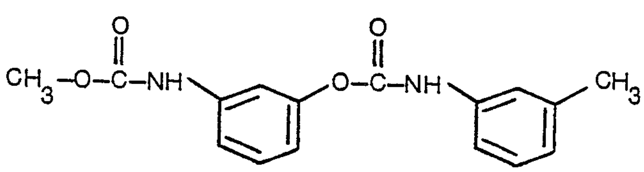

(méthyl 3,3'-méthylphénylcarbamoyloxy phénylcarbamate)

dans laquelle le rapport rapport pondéral (a)/(b) est compris entre 0,1/1 et 10/1.

2. Une composition ainsi que revendiquée dans la revendication 1, caractérisée en ce que le rapport pondéral (a)/(b) est compris entre 0,1/1 et 5/1.

3. Une composition herbicide ainsi que revendiquée dans la revendication 1 ou la revendication 2, comprenant un diluant ou support inerte.

4. Un procédé de contrôle de la végétation indésirable, caractérisé en ce qu'on applique à ladite végétation au stade de post-émergence une composition herbicide ainsi que revendiquée dans l'une quelconque des revendications 1 à 3.

5. Un procédé de préparation d'une composition herbicide ainsi que revendiquée dans la revendication 3, caractérisé en ce que le constituant (a) et le constituant (b) tels que définis dans la revendication 1 sont incorporés dans un diluant ou support inerte dans le rapport défini dans la revendication 1.